(19) **Europäisches Patentamt / European Patent Office / Office européen des brevets**

(11) **EP 3 778 195 B1**

(12) **EUROPEAN PATENT SPECIFICATION**

(45) Date of publication and mention
of the grant of the patent:
**12.07.2023 Bulletin 2023/28**

(21) Application number: **19775044.1**

(22) Date of filing: **28.03.2019**

(51) International Patent Classification (IPC):
**B29C 51/02** (2006.01)   **B29C 51/10** (2006.01)
**B29C 43/18** (2006.01)   **B29C 65/02** (2006.01)
**B29C 51/12** (2006.01)   **B29B 13/02** (2006.01)
B29L 31/30 (2006.01)   B29L 31/00 (2006.01)
B29C 51/00 (2006.01)   B29C 51/08 (2006.01)
B29C 51/16 (2006.01)   B29K 105/12 (2006.01)

(52) Cooperative Patent Classification (CPC):
**B29C 51/02; B29C 43/183; B29C 65/02;**
B29B 13/023; B29C 43/184; B29C 51/002;
B29C 51/08; B29C 51/10; B29C 51/12; B29C 51/16;
B29K 2105/12; B29K 2715/003; B29L 2031/30;
B29L 2031/3005; B29L 2031/722

(86) International application number:
**PCT/JP2019/013619**

(87) International publication number:
**WO 2019/189582 (03.10.2019 Gazette 2019/40)**

(54) **METHOD FOR MANUFACTURING MOLDED ARTICLE**

VERFAHREN ZUR HERSTELLUNG EINES FORMARTIKELS

PROCÉDÉ DE FABRICATION D'UN ARTICLE MOULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2018 JP 2018069182**

(43) Date of publication of application:
**17.02.2021 Bulletin 2021/07**

(73) Proprietor: **Toray Industries, Inc.**
**Tokyo 103-8666 (JP)**

(72) Inventors:
• **FUJIOKA, Takashi**
**Iyo-gun, Ehime 791-3193 (JP)**
• **SHINOHARA, Kotaro**
**Iyo-gun, Ehime 791-3193 (JP)**
• **HONMA, Masato**
**Iyo-gun, Ehime 791-3193 (JP)**

(74) Representative: **Mewburn Ellis LLP**
**Aurora Building**
**Counterslip**
**Bristol BS1 6BX (GB)**

(56) References cited:
EP-A1- 0 746 458     EP-A1- 3 040 195
EP-B1- 0 746 458     DE-A1-102011 000 336
JP-A- H08 238 705    JP-A- 2001 150 587
JP-A- 2018 047 681   US-A1- 2005 161 865
US-A1- 2017 334 146

**Description**

Field

The present invention relates to a method for manufacturing a molded article excellent in designability and productivity.

Background

In recent years, improvement in lightweightness is increasingly required in the market of industrial products such as those used in an automobile, an aircraft, and a sport good. In order to meet such a requirement, a fiber-reinforced composite material that is light and excellent in mechanical characteristics is being utilized widely in various industrial uses. In particular, in order to further improve the lightweightness thereof, structural bodies that are formed of a resin, a reinforcing fiber, and a void, and that are excellent in mechanical characteristics have been proposed (see, for example, Patent Literature 1).

In the products using the fiber-reinforced composite material, there are occasions when a decoration layer is required in order to afford designability thereto (see, for example, Patent Literature 2). In spite of such a requirement, formation of a decoration layer on the fiber-reinforced composite material having a void has not been extensively investigated. A disclosed example of the molded article having a resin sheet laminated on a surface of a fiber-reinforced composite material is a fiber-reinforced thermoplastic resin hollow body in which fiber-reinforced thermoplastic resin sheets are adhered with each other by means of an adhesive, and then an air-impermeable film made of a thermoplastic resin is adhered onto the surface opposite to the adhered surface thereof to obtain a multilayer sheet, which is then followed by preheating thereof to expand in a thickness direction thereby forming a hollow portion therein (see, for example, Patent Literature 3). However, the air-impermeable film of Patent Literature 3, which is made of a thermoplastic resin that is adhered onto the fiber-reinforced thermoplastic resin sheet, is not a decoration layer, because this is formed in order to mold the fiber-reinforced thermoplastic resin sheet by evacuation. Therefore, in view of designability, formation of a decoration layer (surface skin material) is additionally necessary. In addition, because the molding in Patent Literature 3 is done by evacuation, there is a fluctuation risk in the mechanical characteristics of the molded article of the fiber-reinforced thermoplastic resin.

A technology has also been proposed to form a skin material on the surface of a porous body (see, for example, Patent Literature 4); but the skin layer in Patent Literature 4 is formed with an aim to enhance a rigidity of a core layer that has a void. Therefore, in view of designability, formation of a decoration layer is additionally necessary. In addition, because a prepreg having a matrix resin impregnated into continuous reinforcing fibers is used as the skin layer, a molded article formed therefrom and having a complex structure can cause a wrinkle and a crack.

Another method for producing a molded article obtained by integrating a decoration layer onto a surface of a porous body including a reinforcing fibers is known from patent literature 5. It relates to thermoforming a substrate sheet to form a shaped substrate, wherein the shaped substrate is a fiber-reinforced plastic material having a void content sufficient to allow a vacuum to be applied through the shaped substrate.

Citation List

Patent Literature

Patent Literature 1: Japanese Patent No. 6123965
Patent Literature 2: Japanese Patent Application Laid-open No. 2016-78451
Patent Literature 3: Japanese Laid-open Patent Publication No. H09-254248
Patent Literature 4: International Publication No. 2015/029634
Patent literature 5: US 2005/161865 A1

Summary

Technical Problem

Present invention was made in the light of the circumstances as described above; and thus, the present invention intends to provide a method for producing a molded article that is excellent in rigidity and lightweightness and has enhanced designability and productivity.

Solution to Problem

A method for producing a molded article according to the present invention is a method for producing a molded article obtained by integrating a decoration layer onto a surface of a porous body including a reinforcing fiber. The method includes: a preheating process at which the decoration layer is preheated; and a shaping and integrating process at which the porous body is pressed to the decoration layer or the decoration layer is pressed to the porous body to shape the decoration layer, and the porous body and the decoration layer are integrated to each other.

A method for producing a molded article according to the present invention is a method for producing a molded article obtained by integrating a decoration layer onto a surface of a porous body including a reinforcing fiber. The method includes: a preheating process at which the decoration layer is preheated; a shaping process at which the porous body is pressed to the decoration layer or the decoration layer is pressed to the porous body to shape the decoration layer; and an integrating process at which the porous body and the decoration layer are integrated to each other.

A method for producing a molded article according to the present invention is a method for producing a molded article obtained by integrating a decoration layer onto a surface of a porous body including a reinforcing fiber. The method includes: a preheating process at which the decoration layer is preheated; and a shaping and integrating process at which the decoration layer is shaped along the porous body, and the porous body and the decoration layer are integrated to each other. In a closed space having a space including the porous body and having a space not including the porous body, these spaces being separated by the decoration layer as a boundary between these spaces, pressures are made different between these two spaces to perform the shaping as well as the integration of the porous body with the decoration layer.

A method for producing a molded article according to the present invention is a method for producing a molded article obtained by integrating a decoration layer onto a surface of a porous body including a reinforcing fiber. The method includes: a preheating process at which the decoration layer is preheated; a shaping process at which the decoration layer is shaped along the porous body; and an integrating process at which the porous body and the decoration layer are integrated to each other. In a closed space having a space including the porous body and a space not including the porous body, these spaces being separated by the decoration layer as a boundary between these spaces, pressures are made different between these two spaces to perform any one of the shaping process and the integrating process or both.

Advantageous Effects of Invention

According to the method for producing a molded article of the present invention, there is no risk of fluctuation in mechanical characteristics of the porous body. In addition, a preliminary shaping process of a decoration layer and a mold are not necessary, so that a molded article that is excellent in productivity can be obtained.

Brief Description of Drawings

FIG. 1 is a schematic drawing to describe one example of a dispersion state of the reinforcing fibers in the reinforcing fiber mat according to the present invention.
FIG. 2 is a schematic drawing to describe one example of production equipment of the reinforcing fiber mat according to the present invention.
FIG. 3 is a drawing to describe production of the porous body according to the present invention.
FIG. 4 is a drawing to describe production of the porous body according to the present invention.
FIG. 5 is a drawing to describe production of the molded article according to the present invention.
FIG. 6 is a drawing to describe production of the molded article according to the present invention.
FIG. 7 is a drawing to describe production of the molded article according to the present invention.
FIG. 8 is a drawing to describe production of the molded article according to the present invention. Description of Embodiments

Hereinafter, the method for producing a molded article according to the present invention will be described.
The method for producing a molded article according to the present invention is a method for producing a molded article obtained by integrating a decoration layer onto a surface of a porous body including a reinforcing fiber, the method including: a preheating process at which the decoration layer is preheated; and a shaping and integrating process at which the porous body is pressed to the decoration layer or the decoration layer is pressed to the porous body thereby shaping the decoration layer while the porous body and the decoration layer are integrated to each other.

Porous Body

In the molded article of the present invention, it is preferable that the porous body include a resin and a void, in addition to a reinforcing fiber.

In the porous body of the present invention, illustrative examples of the reinforcing fiber include: metal fibers such as aluminum, yellow copper, and stainless steel; carbon fibers such as a PAN type, a rayon type, a lignin type, and a pitch type; graphite fibers; insulating fibers such as a glass; organic fibers such as aramid, PBO, polyphenylene sulfide, polyester, acrylic, nylon, and polyethylene; and inorganic fibers such as silicon carbide and silicon nitride. In addition, these fibers whose surfaces have been surface-treated may be used as well. Illustrative examples of the surface treatment include, in addition to an attachment treatment with a metal as a conductive body, a treatment with a coupling agent, a treatment with a sizing agent, a treatment with a binding agent, and an attachment treatment with an additive. These fibers may be used singly, or two or more of them may be used concurrently. Of these, in view of a lightweight effect, carbon fibers such as a PAN type, a pitch type, and a rayon type, these being excellent in a specific strength and a specific rigidity, are preferably used. In view of enhancement in economy of the porous body to be obtained, a glass fiber is preferably used; and especially in view of a balance between an economy and mechanical characteristics, a concurrent use of a carbon fiber and a glass fiber is preferable. In view of enhancement in a shock-absorbing property and a shape-formability of the porous body to be obtained, an aramid fiber is preferably used; and especially in view of a balance between mechanical characteristics and a shock-absorbing property, a concurrent use of a carbon fiber and an aramid fiber is preferable. In view of enhancement in conductivity of the porous body to be obtained, a metal fiber formed of a conductive metal, as well as a reinforcing fiber covered with a metal such as nickel, copper, or ytterbium may also be used. Of these, a reinforcing fiber selected from the group consisting of a metal fiber, a pitch type carbon fiber, and a PAN type carbon fiber may be preferably used; these fibers being excellent in mechanical characteristics such as strength and an elastic modulus.

It is preferable that the reinforcing fiber be discontinuous and dispersed randomly in the porous body. It is more preferable that the dispersion thereof be in the substantially monofilament-like state. The reinforcing fiber according to the embodiment can be readily shaped into a complex shape upon molding the precursor of the porous body in the sheet-like form, by means of an external force. In addition, the reinforcing fiber according to the embodiment can densify the voids formed by the reinforcing fibers, so that a weak portion in the tip of the fiber bunch of the reinforcing fibers in the porous body can be minimized; and thus, in addition to excellent reinforcing efficiency and reliability, an isotropy can be provided.

Here, the substantially monofilament-like state means that the reinforcing fiber single thread exists as a strand of less than 500 fine fiber threads. More preferably, they are dispersed in a monofilament-like state, namely in the state of a single thread.

Here, the dispersion in the substantially monofilament-like state or in the monofilament-like state means that the ratio of the single fibers having the two-dimensional orientation angle of 1° or more (hereinafter, this is also called a fiber dispersion rate) is 80% or more in the reinforcing fibers that are randomly selected in the porous body; in other words, this means that the bunch in which 2 or more single fibers contact in parallel is less than 20% in the porous body. Accordingly, it is especially preferable here that a mass fraction of the fiber bunch including 100 or less filaments at least in the reinforcing fibers be 100%.

It is especially preferable that the reinforcing fibers be dispersed randomly. Here, the random dispersion of the reinforcing fibers means that an arithmetic average value of the two-dimensional orientation angle of the reinforcing fibers that are randomly selected in the porous body is in the range of 30° or more and 60° or less. The two-dimensional orientation angle is an angle formed between a single fiber of the reinforcing fibers and a single fiber intersecting with the before-mentioned single fiber; and this is defined as the angle in the acute angle side in the range of 0° or more and 90° or less among the angles formed by the intersecting single fibers with each other.

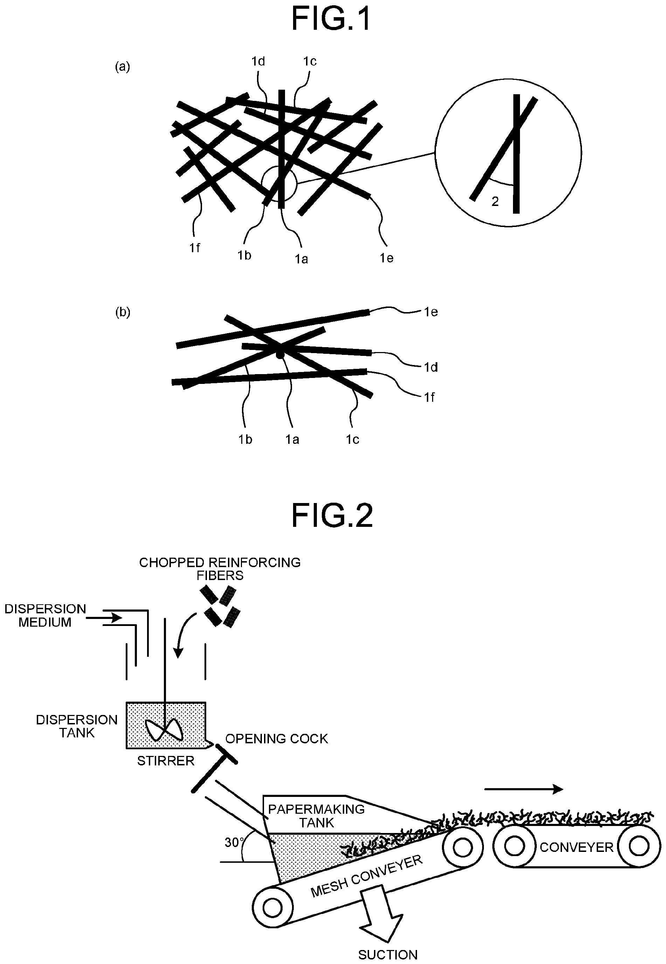

This two-dimensional orientation angle will be further elaborated by referring to the drawings. In FIG. 1(a) and FIG. 1(b), taking a single fiber 1a as a standard, the single fiber 1a intersects with other single fibers 1b to 1f. Here, the term "intersect" means the state in which the standard single fiber is observed to intersect with other single fiber in the observed two-dimensional plane; and thus, the single fiber 1a does not necessarily contact with other single fibers 1b to 1f, so that this does not exclude the state in which these fibers are observed to intersect with each other upon projection. Namely, with regard to the single fiber 1a as the standard, all of the single fibers 1b to 1f are the objects for evaluation, in which in FIG. 1(a), the two-dimensional orientation angle is the angle in the acute angle side in the range of 0° or more and 90° or less among the two angles formed by the intersecting two single fibers.

There is no particular restriction as to the measurement method of the two-dimensional orientation angle. One example thereof is to observe the orientation of the reinforcing fiber from the surface of the constitution element. The average value of the two-dimensional orientation angles is measured with the following procedure. Namely, the average value of the two-dimensional orientation angles of a single fiber randomly selected (single fiber 1a in FIG. 1) with all the single fibers that intersect therewith (single fibers 1b to 1f in FIG. 1) is measured. For example, in the case that a certain single fiber intersects with many other single fibers, 20 of the other single fibers intersecting therewith are randomly selected; and an arithmetic average value of these measured values may be used as a substitute. This measurement is repeated five times in total using other single fiber as the standard; and the arithmetic average value thereof is calculated as the arithmetic average value of the two-dimensional orientation angles.

When the reinforcing fibers are dispersed randomly and in the substantially monofilament-like state, the performance provided by the reinforcing fibers dispersed in the substantially monofilament-like state described above can be maximized. In addition, an isotropy can be given to the mechanical characteristics in the porous body. From these viewpoints, the fiber dispersion rate of the reinforcing fibers is preferably 90% or more, while it is more preferable when this rate approaches to 100% as close as possible. The arithmetic average value of the two-dimensional orientation angles of the reinforcing fibers is preferably in the range of 40° or more and 50° or less, while it is more preferable when it approaches to the ideal angle of 45° as close as possible. In the preferable range of the two-dimensional orientation angle, the upper limit thereof may be any of the above-mentioned upper limit value, and the lower limit thereof may be any of the above-mentioned lower limit value.

On the other hand, illustrative examples of the reinforcing fibers not in the non-discontinuous form include a sheet substrate, a woven substrate, and a non-crimp substrate, in which the reinforcing fibers are orientated in one direction. In these forms, the reinforcing fibers are disposed regularly and densely, resulting in a decrease in the voids in the porous body; and thus, impregnation of the resin thereto is very difficult, thereby occasionally causing formation of a non-impregnated portion as well as significant restriction in choice of the impregnation method and of the resin type.

The reinforcing fiber may be any in the form of a continuous reinforcing fiber having substantially the same length as the porous body, or in the form of a discontinuous reinforcing fiber having been cut to a prescribed, limited length. In view of easy impregnation of the resin and easy adjustment of the amount thereof, the discontinuous reinforcing fiber is preferable.

In the porous body of the present invention, the mass-average fiber length of the reinforcing fibers is preferably in the range of 1 mm or more and 15 mm or less. In such a case, the reinforcing efficiency of the reinforcing fiber can be enhanced so that the porous body can be provided with excellent mechanical characteristics. When the mass-average fiber length of the reinforcing fibers is 1 mm or more, the void in the porous body can be formed so efficiently that the density can be lowered. In other words, the porous body with lightweightness can be obtained even if the thickness thereof is the same; and thus, this is preferable. On the other hand, when the mass-average fiber length of the reinforcing fibers is 15 mm or less, the reinforcing fiber in the porous body is difficult to be bent by its own weight so that expression of the mechanical characteristics is not impaired; and thus, this is preferable. The mass-average fiber length can be calculated as follows. Namely, after the resin component in the porous body is removed with a method such as burning and elution, 400 fibers are randomly selected from the remaining reinforcing fibers; and then, the lengths thereof are measured to the unit of 10 $\mu$m. From these values, the mass-average fiber length can be calculated.

In view of easy impregnation of the resin into the reinforcing fibers, the reinforcing fiber is preferably in the form of a nonwoven fabric. The reinforcing fiber in the form of a nonwoven fabric is preferable also because of not only easy handling of the nonwoven fabric itself but also easy impregnation even in the case of a thermoplastic resin, which is generally considered to be highly viscous. Here, the form of the nonwoven fabric means the form in which strands and/or monofilaments of the reinforcing fibers are irregularly dispersed in plane directions. Illustrative examples thereof include a chopped strand mat, a continuance strand mat, a paper-made mat, a carding mat, and an air-laid mat (hereinafter, these are collectively called a reinforcing fiber mat).

In the porous body of the present invention, illustrative examples of the resin include a thermoplastic resin and a thermosetting resin. In the present invention, the thermoplastic resin and the thermosetting resin may be blended. The resin becomes a matrix resin constituting the porous body and the precursor of the porous body.

In an embodiment of the present invention, it is preferable that the resin include at least one or more thermoplastic resins. Illustrative examples of the thermoplastic resin include: crystalline resins [for example, polyesters such as polyethylene terephthalate (PET), polybutylene terephthalate (PBT), polytrimethylene terephthalate (PTT), polyethylene naphthalate (PEN), and liquid crystal polyester; polyolefins such as polyethylene (PE), polypropylene (PP), and polybutylene; polyoxymethylene (POM); polyamide (PA); polyarylene sulfides such as polyphenylene sulfide (PPS); polyketone (PK); polyether ketone (PEK); polyether ether ketone (PEEK); polyether ketone (PEKK); polyether nitrile (PEN); fluorine-containing resins such as polytetrafluoroethylene; and liquid crystal polymers (LCP)]; amorphous resins [for example, in addition to styrenic resins, polycarbonate (PC), polymethyl methacrylate (PMMA), polyvinyl chloride (PVC), polyphenylene ether (PPE), polyimide (PI), polyamide imide (PAI), polyether imide (PEI), polysulfone (PSU), polyether sulfone, and polyarylate (PAR)]; and other resins such as a phenol type, a phenoxy, a polystyrene type, a polyolefin type, a polyurethane type, a polyester type, a polyamide type, a polybutadiene type, a polyisoprene type, and fluorine type resins; and thermoplastic elastomers such as an acrylonitrile type resin, as well as thermoplastic resins selected from copolymers of these resins and modified resins thereof. Of these, in view of lightweightness of the porous body to be obtained, polyolefins are preferable; in view of strength, polyamides are preferable; in view of surface appearance, amorphous resins such as polycarbonate and styrenic resins are preferable; in view of heat resistance, polyarylene sulfides are preferable; in view of continuous use temperature, polyether ether ketones are preferable; and in view of chemical resistance, fluorine type resins are preferably used.

In an embodiment of the present invention, it is preferable that the resin include at least one or more thermosetting resins. Illustrative examples of the thermosetting resin include unsaturated polyesters, vinyl esters, epoxy resins, phenol resins, urea resins, melamine resins, thermosetting polyimides, copolymers of these resins, modified resins of them, as well as a blend of at least two or more of them.

The porous body of the present invention may contain, as one ingredient of the resin, a shock resistance enhancer such as an elastomer or a rubber ingredient, as well as other filling material and additives so far as they do not impair the object of the present invention. Illustrative examples of the filling material and the additive include an inorganic filling material, a flame retardant, a conductivity affording agent, a nucleating agent, a UV absorber, an antioxidant, a vibration damping material, an antibacterial agent, an insecticide, a deodorant, an anti-coloring agent, a heat stabilizer, a releasing agent, an antistatic agent, a plasticizer, a lubricant, a coloring material, a pigment, a dye, a blowing agent, an antifoaming agent, and a coupling agent.

The porous body of the present invention has the void. The void in the present invention means a space formed by overlapping or crossing of pillar-like supporting bodies, which are formed of the reinforcing fibers covered with the resin. For example, in the case that the porous body is obtained by heating the precursor of the porous body prepared by impregnating the reinforcing fibers with the resin in advance, the reinforcing fiber is raised up by melting or softening of the resin due to heating thereby forming the void. This takes place because of the property that the reinforcing fiber, which is in the compressed state due to pressure, is raised up in the precursor of the porous body due to the elastic modulus thereof. The void is continuous at least in a thickness direction.

In the porous body of the present invention, it is preferable that the content rate by volume (%) of the reinforcing fiber be in the range of 0.5 to 55% by volume, that the content rate by volume (%) of the resin be in the range of 2.5 to 85% by volume, and that the content rate by volume (%) of the void be in the range of 10 to 97% by volume.

When the content rate by volume of the reinforcing fiber in the porous body is 0.5% or more by volume, the reinforcing effect derived from the reinforcing fiber can be made sufficient; and thus, this is preferable. On the other hand, when the content rate by volume of the reinforcing fiber is 55% or less by volume, the content rate by volume of the resin relative to the reinforcing fiber increases so that the reinforcing fibers in the porous body are firmly bound with each other, resulting in the sufficient reinforcing effect of the reinforcing fiber. Accordingly, the mechanical characteristics of the porous body, especially a bending characteristic thereof, can be satisfied; and thus, this is preferable.

When the content rate by volume of the resin is 2.5% or more by volume in the porous body, the reinforcing fibers in the porous body can be firmly bound with each other so that the reinforcing effect of the reinforcing fiber can be made sufficient. Accordingly, the mechanical characteristics of the porous body, especially a bending characteristic thereof, can be satisfied; and thus, this is preferable. On the other hand, when the content rate by volume of the resin is 85% or less by volume, formation of void is not disturbed; and thus, this is preferable.

In the porous body, the reinforcing fiber is covered with the resin, in which thickness of the covering resin (cover thickness) is preferably in the range of 1 $\mu$m or more and 15 $\mu$m or less. In view of shape stability of the porous body and an easiness and a freedom in the thickness control, the covering state of the reinforcing fiber covered with the resin is satisfactory so far as the point at which the single fibers of the reinforcing fibers that constitute the porous body are crossing with each other is covered therewith. A more preferable embodiment is the state that the resin covers around the reinforcing fiber with the above-mentioned thickness. In this state, the surface of the reinforcing fiber is not exposed because of the resin. In other words, this means that the reinforcing fiber has a film formed with the resin, similarly to an electric wire. Through this, the porous body can have the further enhanced shape stability and ensures expression of the mechanical characteristics. With regard to the covering state of the reinforcing fiber covered with the resin, the reinforcing fiber does not need to be entirely covered; and thus, the state is satisfactory so far as the shape stability, the flexural modulus, and the bending strength of the porous body of the present invention are not impaired.

In the porous body, the content rate by volume of the void is preferably in the range of 10% by volume or more and 97% by volume or less. When the content rate of the void is 10% or more by volume, the density of the porous body is low and the lightweightness thereof can be satisfied; and thus, this is preferable. On the other hand, when the content rate of the void is 97% or less by volume, this means that the thickness of the resin covering around the reinforcing fiber is sufficient, so that the reinforcing fibers in the porous body can be sufficiently reinforced with each other thereby enhancing the mechanical characteristics; and thus, this is preferable. The upper limit value of the content rate by volume of the void is preferably 97% by volume. In the present invention, total of the content rates by volume of the reinforcing fiber, the resin, and the void, these being the components that constitute the porous body, is taken as 100% by volume.

In the porous body, the void is formed by a restoring force to resume an original state, the restoring force being generated due to rise of the reinforcing fibers caused by lowering of a viscosity of the resin in the precursor of the porous body. Through this, the reinforcing fibers are bound with each other via the resin (thermoplastic resin or thermosetting resin) thereby expressing a firmer compression characteristic and a shape retentive property of the porous body; and thus, this is preferable.

The density $\rho$ of the porous body is preferably 0.9 g/cm$^3$ or less. When the density $\rho$ of the porous body is 0.9 g/cm$^3$ or less, this means that the mass of the porous body is lowered, thereby contributing to reduction in the mass of the product to be obtained; and thus, this is preferable. The density is more preferably 0.7 g/cm$^3$ or less, while still more preferably 0.5 g/cm$^3$ or less. Although there is no restriction as to the lower limit of the density, in the porous body including the reinforcing fiber and the resin, in general, the lower limit can be the value calculated from the volume ratios of the reinforcing fiber, the resin, and the void, which are the constituting components thereof. In view of retaining the mechanical characteristics of the porous body, the density of the porous body itself in the molded article of the present invention is preferably 0.03 g/cm$^3$ or more, although this value is different depending on the reinforcing fiber and the resin to be used.

The compression strength of the porous body upon compression of 50%, measured in accordance with JIS K7220, is preferably 1 MPa or more. When the compression strength is 1 MPa or more, the molded article is excellent in the shape retentive property, so that the decoration layer can be shaped by pressing the porous body to the decoration layer or by pressing the decoration layer to the porous body. Although there is no practical problem when the compression strength is 1 MPa or more, it is preferably 3 MPa or more.

The surface roughness Ra1 of the porous body is preferably 200 $\mu$m or less. When the surface roughness Ra1 of the porous body is 200 $\mu$m or less, the surface roughness Ra2 of the molded article can be in the intended range. In view of enhancement in the adhesion between the decoration layer and the porous body thereby helping mechanical anchoring, the roughness of the porous body is preferably 10 $\mu$m or more, and more preferably 30 $\mu$m or more, while still more preferably 50 $\mu$m or more.

It is preferable that the void in the porous body be continuous at least in a thickness direction thereof. When the void is continuous in the thickness direction, the porous body is air-permeable. When the porous body is air-permeable, at the time of integrating the porous body and the decoration layer, the integration can be made by evacuating from the side of the porous body that is opposite to the contacting surface of the porous body with the decoration layer. In this method, because the integration is made by evacuation through the porous body (through the void in the porous body), the adhesion of the decoration layer to the porous body can be enhanced.

Decoration Layer

In the molded article of the present invention, the decoration layer is a film-like layer formed with an intention to afford designability so that the molded article may be provided as a final product. Illustrative examples of the film-like layer include those made of a resin, a metal, or a wooden material. Among them, a film made of a resin is preferable, while a resin film decorated with print-coating, vacuum evaporation, coloring, or the like is more preferable.

A thermoplastic resin may be used as a base resin of the decoration layer. There is no particular restriction as to the thermoplastic resin. Any thermoplastic resin may be used, including polyethylene terephthalate (PET), an acrylic resin (MMA), a polycarbonate (PC), a polyolefin (PO), and an acrylonitrile-butadiene-styrene (ABS) resin. The resin film to constitute the decoration layer may be not only a single layer but also a resin film having plural layers such as MMA/PC and MMA/PC/MMA. Here, the thermoplastic resin may be chosen in the same way as those that constitute the porous body.

The decoration layer may be added with an additive in accordance with an object thereof, in addition to the above-mentioned resin.

There is no particular restriction as to the additive. The additive is added in order to provide the molded article with a color as well as designability such as a pearl feeling and a metallic feeling.

Illustrative examples of the additive include a pigment and a glass bead. Specific examples thereof are: organic pigments such as an azo pigment and phthalocyanine blue; metal pigments formed of metal powders such as powders of aluminum and brass; and inorganic pigments such as chromium oxide and cobalt blue. Of these, in view of heat resistance, metal pigments and inorganic pigments are preferable. When the reinforcing fiber has a dark color such as colors of a carbon fiber and an aramid fiber, the pigment having two or more layers that have structures with different refractive indexes are preferably used. Illustrative examples thereof include natural mica, artificial mica, alumina flake, silica flake, and glass flake, all being covered with titanium oxide or iron oxide. The layer structure like this can develop a color by an optical phenomenon such as interference, diffraction, or scattering of light in a visible light region. Utilization of the optical phenomenon such as interference, diffraction, or scattering can develop a color by reflection of light having a specific wavelength; and thus, they are preferably used when the reinforcing fiber having a deep color is used.

In view of suppressing an increase in the mass of the decoration layer and of the molded article, an additive having a hollow form may also be used. In view of lightweightness, preferable examples of the additive having a hollow form include a hollow glass bead and a porous resin particle.

The additive may be in the shape of sphere-like, fiber-like, or flake-like. The maximum size of the additive at the time of addition thereof is preferably 200 $\mu$m or less. Here, the maximum size of the additive at the time of addition thereof is the largest size of primary particles of the additive or the largest size of secondary particles thereof when the additive undergoes agglomeration or the like. When the maximum size of the additive is 200 $\mu$m or less, the surface of the decoration layer is flat and smooth, so that designability thereof can be enhanced. The maximum size of the additive can be obtained by observing the additive by means of an electron microscope as follows. Namely, arbitrary 100 additives are randomly chosen in the picture that is enlarged such that the size may be measured to the unit of at least 1 $\mu$m; and a maximum distance between arbitrarily selected two points on the outer circumference line of each additive is measured. The maximum size is obtained as the average value of these maximum lengths.

The maximum size of the additive is more preferably 150 $\mu$m or less, while still more preferably 100 $\mu$m or less. The lower limit of the maximum size of the additive is preferably 1 $\mu$m or more, and more preferably 5 $\mu$m or more, while still more preferably 10 $\mu$m or more.

Molded Article

In the molded article of the present invention, the thickness of the decoration layer is preferably in the range of 10 $\mu$m or more and 500 $\mu$m or less. When the thickness is less than 10 $\mu$m, upon shaping the decoration layer to the porous body at the shaping and integrating process, the decoration layer can be difficult to retain its own shape. When the thickness is more than 500 $\mu$m, the flat and smooth surface having excellent designability can be formed, but expression of the lightweightness of the molded article is difficult because of the increase in the mass of the molded article. The thickness of the decoration layer is more preferably in the range of 50 $\mu$m or more and 400 $\mu$m or less.

In the molded article of the present invention, the surface roughness Ra2 of the decoration layer of the molded article is preferably 100 $\mu$m or less. When the surface roughness Ra2 is 100 $\mu$m or less, the surface thereof is flat and smooth. The surface roughness is more preferably 50 $\mu$m or less, while still more preferably 30 $\mu$m or less, because with this, the molded article having further enhanced designability can be obtained.

In the molded article of the present invention, the density $\rho$ is preferably 1.0 g/cm$^3$ or less. When the density $\rho$ of the molded article is 1.0 g/cm$^3$ or less, the mass of the molded article decreases, namely, this contributes to reduction in the mass of the product to be obtained; and thus, this is preferable. The density is more preferably 0.8 g/cm$^3$ or less, while still more preferably 0.6 g/cm$^3$ or less. There is no restriction as to the lower limit of the density. In the molded article having the porous body, which includes the reinforcing fiber and the resin, and the decoration layer that is formed of mainly the resin, in general, the lower limit can be the value calculated from the respective volume ratios of the reinforcing fiber, the resin, and the void, which are the constituting components thereof. In the molded article of the present invention, in view of retaining of mechanical characteristics of the molded article, the density of the molded article is preferably 0.05 g/cm$^3$ or more, although this value is different depending on the reinforcing fiber and the resin to be used.

Production of the Porous Body

The methods for producing the precursor of the porous body and of the porous body will be described.

An illustrative example of the method for producing the precursor may be a method in which a resin that is in a molten or a softened state is pressed to or evacuated with a reinforcing fiber mat. Specifically, in view of easy production thereof, a preferable example thereof is a method in which a piled substance having the resin disposed on both sides of the reinforcing fiber mat in a thickness direction and/or on a center thereof is heated and pressed so as to impregnate in the molten state thereof.

For example, the reinforcing fiber mat that constitutes the porous body may be produced by a method in which the reinforcing fibers are previously dispersed into the state of a strand and/or in the substantially monofilament-like state to produce the reinforcing fiber mat. Heretofore known methods for producing the reinforcing fiber mat are: a dry process such as an air-laid method in which the reinforcing fibers are made into a dispersed sheet in an air stream and a carding method in which the reinforcing fibers are mechanically combed with shaping thereby forming a sheet, as well as a wet process with a Radright method in which the reinforcing fibers are stirred in water for papermaking. With regard to the method with which the reinforcing fiber approaches more to a monofilament-like state, illustrative examples of the dry process include a method in which a fiber-opening bar is installed, a method in which a fiber-opening bar is additionally vibrated, a method in which clearance of the card is made finer, and a method in which rotation speed of the card is adjusted. Illustrative examples of the wet process include a method in which stirring conditions of the reinforcing fiber are controlled, a method in which concentration of the reinforcing fiber in the dispersion solution is diluted, a method in which viscosity of the dispersion solution is controlled, and a method in which a vortex at the time of transporting the dispersion solution is suppressed. In particular, it is preferable that the reinforcing fiber mat be produced with a wet process, in which the ratio of the reinforcing fiber in the reinforcing fiber mat can be readily controlled by increasing the concentration of the charged fiber, or by controlling flow rate (flow amount) of the dispersion solution and the speed of a mesh conveyer, or the like. For example, when the speed of the mesh conveyer is slowed relative to the flow rate of the dispersion solution, the fibers in the reinforcing fiber mat to be obtained are not readily orientated toward a pulling direction so that a bulky reinforcing fiber mat can be produced. The reinforcing fiber mat may be composed of the reinforcing fiber single body, or a mixture of the reinforcing fiber with a matrix resin component in the form of powder or fiber, or a mixture of the reinforcing fiber with an organic compound or an inorganic compound, or the reinforcing fibers may be filled among themselves with the resin component.

In order to realize the methods described above, a compression molding machine or double belt press equipment may be suitably used. A batch type method is carried out with the former equipment; in this method, the productivity thereof can be increased by employing an intermittent press system in which 2 or more pieces of equipment for heating and cooling are arranged in parallel. A continuous type method is carried out with the latter equipment, in which continuous processing can be readily carried out so that this method is superior in the continuous productivity.

Next, with regard to the process at which the precursor is expanded and molded to the porous body, although there is no particular restriction, it is preferable that the precursor be molded to the porous body by lowering the viscosity of the resin that constitutes the porous body. A preferable method for lowering the viscosity of the resin is to heat the precursor. There is no particular restriction as to the heating method. The heating may be carried out by contacting with a mold or a hot plate whose temperature is set at an intended temperature or by a non-contacting heating by means of a heater or the like. In the case that a thermoplastic resin is used as the resin that constitutes the porous body, heating may be carried out at the temperature of the melting point or the softening point thereof or higher; in the case that a thermosetting resin is used, heating is carried out at the temperature lower than the temperature at which a curing reaction thereof initiates.

Although there is no restriction as to the method for controlling the thickness of the porous body so far as the precursor to be heated can be controlled within a target thickness, preferable examples thereof in view of convenience in the production thereof include a method in which the thickness is restricted by using a metal plate or the like and a method in which the thickness is controlled by pressure applied to the precursor. A compression molding machine or a double belt press machine may be preferably used as the equipment for achieving these methods described above. A batch type method is carried out with the former equipment; in this type, the productivity thereof can be increased by employing an intermittent press system in which 2 or more pieces of equipment for heating and cooling are arranged in parallel. A continuous type method is carried out with the latter equipment, in which continuous processing can be readily carried out so that this method is superior in the continuous productivity.

Production of the Molded Article

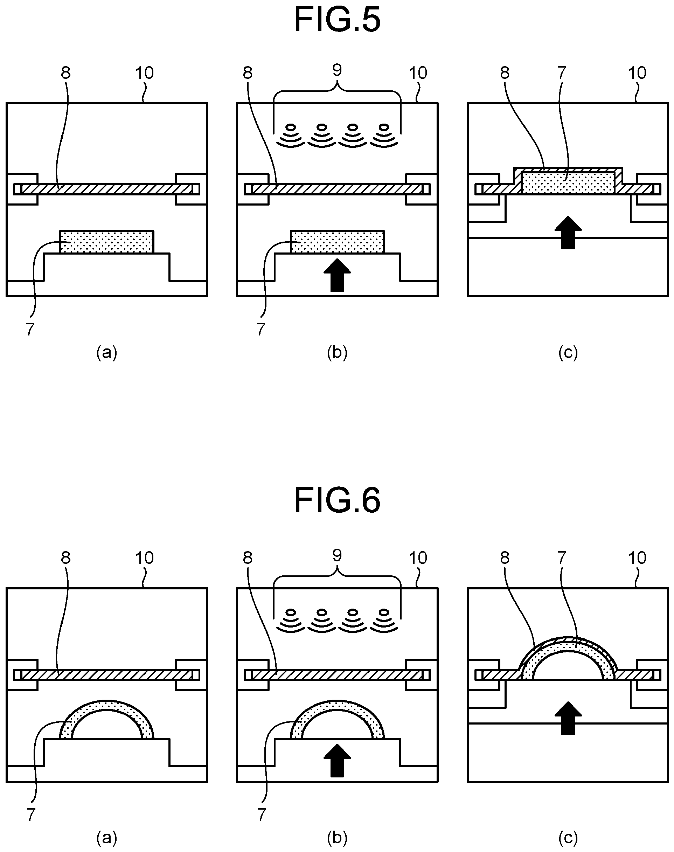

There is no particular restriction as to the method for shaping the decoration layer to the porous body. Illustrative examples thereof include an in-mold molding method in which, for example, the decoration layer such as a resin film is disposed in a mold to which the porous body is subsequently charged, and an out-mold molding method in which, for example, the decoration layer such as a resin film is pressed to the porous body or the porous body is pressed to the decoration body. The method used particularly in the present invention is the out-mold molding method. FIG. 5 is a drawing to describe production of the molded article according to the present invention, using the resin film as the decoration layer. In the production method of the molded article of the present invention, first, a decoration layer 8 is preheated (preheating process). The preheating temperature of the decoration layer 8 may be a temperature at which the decoration layer 8 can be shaped, although this temperature is different depending on the resin film to be used. The preheating temperature of the decoration layer 8 is preferably 100°C or higher. In the case that the resin in the molded article and the resin in the decoration layer are identical, by heating at the temperature equal to or higher than the melting point or the softening temperature of the resin, the porous body 7 and the decoration layer 8 can be thermally welded, resulting in an enhancement of the adhesion property thereof. Preheating of the decoration layer 8 may be carried out in a furnace or the like whose temperature is controllable. In FIG. 5(a), the decoration layer 8 and the porous body 7 in the plate-like shape are disposed in an oven 10 whose temperature is controllable; and then, the decoration layer 8 and the porous body 7 are preheated.

Although preheating of the porous body 7 is not always necessary, it is preferable to preheat the porous body 7 because the shaping property of the decoration layer 8 and the adhesion property thereof with the porous body 7 can be enhanced. At this time, it is preferable that the porous body 7 be preheated to the temperature equal to or lower than the preheating temperature of the decoration layer 8 at the preheating process. When the preheating temperature of the decoration layer 8 is intended to be higher than the preheating temperature of the porous body 7, this may be carried out by means of an IR heater 9 or the like, as illustrated in FIG. 5(b). On the other hand, when the temperature of the porous body 7 is intended to be equal to or lower than the preheating temperature of the decoration layer 8, this may be carried out, among others, by the method, as described in FIG. 5, in which the distance from the IR heater 9 to the porous body 7 is farther than the distance to the decoration layer, or by the method in which the temperature of the furnace in which the porous body 7 is disposed is set at a temperature lower than the preheating temperature of the decoration layer 8.

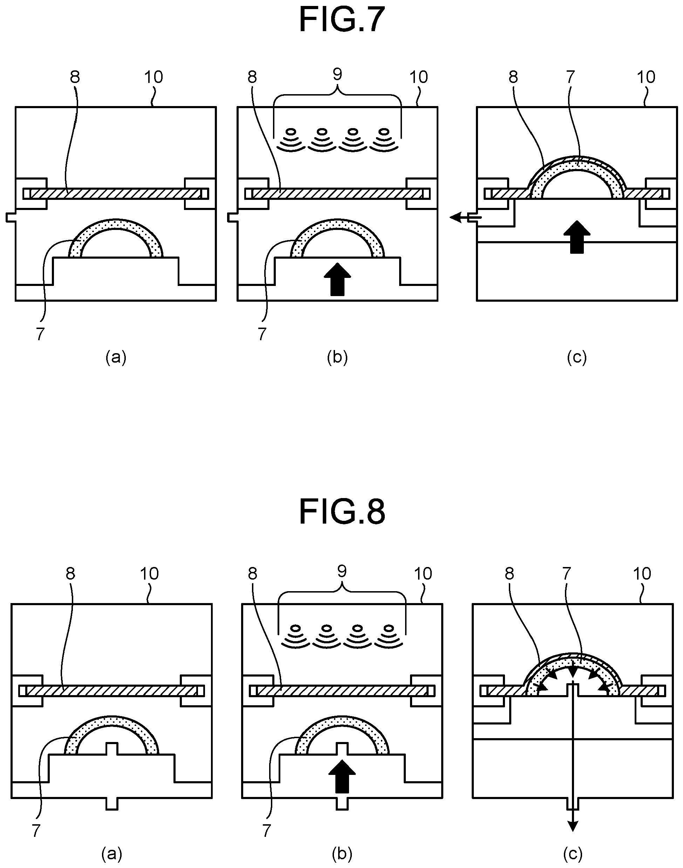

Next, the porous body 7 is pressed to the decoration layer 8, or the decoration layer 8 is pressed to the porous body 7, thereby shaping the decoration layer 8 while the porous body 7 and the decoration layer 8 are integrated to each other (shaping and integrating process). There is no particular restriction as to the method in which the decoration layer 8 is pressed to the porous body 7. For example, the pressing may be done by physically moving the position thereof, as illustrated in FIG. 5(c); alternatively, in the closed space of a furnace 10, this space is divided by the decoration layer 8 as the boundary to the compartments, i.e., the space including the porous body 7 and the space not including the porous body 7, and the pressures in these spaces may be made different so as to press it to the other. With regard to the example of causing the different pressures thereby pressing it to the other, as illustrated in FIG. 7(c), illustrative examples thereof include a method in which the space between the porous body 7 and the decoration layer 8 is evacuated thereby pressing it to the other, and a method in which compressed air is fed into the space opposite to the porous body 7 across the decoration layer 8 thereby pressing the decoration layer 8 to the porous body 7. At this time, a vacuum state and a pressurized state may be combined, or a solvent such as water or oil may be used in place of the compressed air. Therefore, by generating the pressure difference between these spaces divided by the decoration layer 8 as the boundary in the closed space, the decoration layer 8 is shaped to the porous body 7, leading to enhancement in shaping to a more complex shape; and thus, this is preferable. Similarly, by generating the pressure difference between these two spaces divided by the decoration layer 8 as the boundary, penetration of the decoration layer 8 into the porous body 7 is facilitated, leading to firm integration between the porous body 7 and the decoration layer 8; and thus, this is preferable. It is more preferable that by generating the pressure difference between these two spaces divided by the decoration layer 8 as the boundary, any one of the shaping and the integration or both be done, while more preferable that by generating the pressure difference between these two spaces divided by the decoration layer 8 as the boundary, the shaping be carried out with the integration between the porous body and the decoration layer. Here, even in the case that the integration is carried out by the pressure difference between these two spaces as described above, the integration may be further intensified by the method to be described later.

In FIG. 6(c), the porous body 7 is pressed to the decoration layer 8 so as to shape the decoration layer 8 to a hemisphere shape, but the decoration layer 8 may also be pressed to the porous body 7 so as to shape the decoration layer 8 to a hemisphere shape. The pressing force at the shaping and integrating process may be selected as appropriate in accordance with the preheating temperature of the decoration layer 8 and the porous body 7, while it is preferably 1 KN or less. Although there is no particular restriction as to the lower limit of the pressing force, in view of shaping the decoration layer 8, this force is preferably 1N or more, while more preferably 10 N or more. At the shaping and integrating process, it is preferable that the decoration layer 8 penetrate into the porous body 7. By so doing, anchoring as well as the contacting surface area of the porous body 7 with the decoration layer 8 increases, whereby the adhesion property is enhanced. At this time, although the penetration depth of the decoration layer 8 into the porous body 7 is not particularly restricted, the depth thereof as the length in a thickness direction of the porous body is preferably 30 $\mu$m or more, and more preferably 50 $\mu$m or more, while still more preferably 100 $\mu$m or more.

At the shaping and integrating process, it is preferable that the decoration layer 8 be shaped, for example, while evacuating inside the furnace 10, thereby integrating the decoration layer 8 with the porous body 7. When the shaping and integration are carried out under a reduced pressure thereby causing the reinforcing fiber of the porous body 7 to penetrate into the decoration layer 8, the adhesion of the porous body 7 with the decoration layer 8 increases due to this anchoring effect. At this time, although there is no particular restriction as to the penetration length of the reinforcing fiber into the decoration layer 8, it is preferably 10 $\mu$m or more, and more preferably 30 $\mu$m or more, while still more preferably 50 $\mu$m or more. Although the state of the reinforcing fiber that penetrates into the decoration layer 8 is not particularly restricted, it is preferable that 10% or more of the total length of the reinforcing fiber penetrate, while more preferably 20% or more thereof penetrate. Here, it is more preferable that the evacuation is done from the side of the porous body 7 that is opposite to the contacting surface of the porous body 7 with the decoration layer 8. There is no particular restriction as to the method for evacuation. Illustrative examples thereof include a method in which evacuation is done by operating a vacuum pump or the like and a method in which a space adjacent to the closed space is made into an evacuated state and the connection thereof with the closed space is opened so as to reduce the pressure therein. In view of stable evacuation, the latter method is preferable. In view of enhancement in the shaping of the decoration layer and in the integration thereof with the porous body, it is preferable that the degree of the evacuation be rapidly changed to carry out any one of the shaping process and the integrating process or both under the state that the decoration layer can readily change the shape thereof. In view of shaping the decoration layer without breakage, the decoration layer being made thin taking lightweightness and so forth into consideration, it is preferable that the degree of the evacuation be slowly changed to carry out any one of the shaping process and the integrating process or both. These degrees of evacuation may be determined as appropriate in accordance with the shape of the porous body and the kind and thickness of the resin to be used in the decoration layer. By evacuating from the side of the porous body 7, the adhesion of the porous body 7 with the decoration layer 8 can be further enhanced.

In the present invention, it is preferable that shaping of the decoration layer 8 and integration of the decoration layer 8 with the porous body 7 be carried out at the same time. The porous body may be pressed to the decoration layer or the decoration layer may be pressed to the porous body so as to shape the decoration layer, and after this shaping process, the porous body may be integrated with the decoration layer. There is no particular restriction as to the integration method; illustrative examples thereof include a method using an adhesive and a thermal welding method. In particular, a thermal welding method is preferable. Illustrative examples thereof include a vibration welding method, an ultrasonic welding method, a laser welding method, and a hot plate welding method. In view of an adhesion property and of a convenient process, an ultrasonic welding method and a hot plate welding method are preferably used.

The molded article of the present invention produced in the way as described above can be used variously. Illustrative examples of the preferable use thereof include: parts for electric and electronic equipment [for example, housings for a personal computer, a display, OA equipment, a mobile phone, a personal digital assistant, PDA (a personal digital assistant such as an electronic diary), a video camera, optical equipment, audio equipment, an air conditioner, illuminating equipment, entertainment goods, toy goods, and other home electric products, a tray, a chassis, an interior component, a vibration board, a speaker corn, and the case thereof]; sound components [for example, a speaker corn]; outer plates or body parts [for example, various members, various frames, various hinges, various arms, various axles, various car bearings, and various beams], [a hood, a roof, a door, a fender, a trunk lid, a side panel, a rear end panel, a front body, an underbody, various pillars, various members, various frames, various beams, various supports, various rails, and various hinges]; outer parts [for example, a bumper, a bumper beam, molding, an undercover, an engine cover, a straightening plate, a spoiler, a cowl louver, and an aero part]; interior parts [for example, an instrument panel, a seat frame, a door trim, a pillar trim, a handle, and various modules]; structural parts for automobiles and two-wheel vehicles [for example, a motor part, a CNG tank, and a gasoline tank]; parts for automobiles and two-wheel vehicles [for example, a battery tray, a head lamp support, a pedal housing, a protector, a lamp reflector, a lamp housing, a noise shield, and a spare tire cover]; construction materials [wall inner members such as a sound shielding wall and a sound protection wall]; and aircraft parts [for example, a landing gear pod, a winglet, a spoiler, an edge, a ladder, an elevator, a fairing, a rib, and a seat]. In view of mechanical characteristics and shaping properties, the molded product is preferably used for automobile interior and exterior armor, housings for electric and electronic equipment, bicycles, structural materials for sporting goods, interior materials for aircrafts, boxes for transportation, and construction materials.

Examples

Hereinafter, the present invention will be further described in detail by Examples.

(1) Content Rate by Volume Vf of the Reinforcing Fiber in the Porous Body

A specimen was cut out from the porous body. After the mass Ws of the specimen was weighed, the specimen was heated in the air at 500°C for 30 minutes to burn out the resin component; and then, the mass Wf of the remaining reinforcing fiber was measured, and the content rate by volume Vf was calculated by the following equation. Here, the densities of the reinforcing fiber and of the resin obtained by measurement with a liquid weighing method in accordance with JIS Z8807 (2012) were used.

$$\text{Vf (\% by volume)} = (\text{Wf}/\rho f)/\{\text{Wf}/\rho f + (\text{Ws}-\text{Wf})/\rho r\} \times 100$$

ρf: Density of the reinforcing fiber (g/cm$^3$)
ρr: Density of the resin (g/cm$^3$)

(2) Density ρ of the Porous Body

A specimen was cut out from the porous body; and an apparent density of the porous body was measured with referring to JIS K7222 (2005). The size of the specimen was 100 mm as a vertical side and 100 mm as a horizontal side. The vertical side, the horizontal side, and the thickness of the specimen were measured with a micrometer; and from the measured values, the volume V of the specimen was calculated. The mass M of the cut-out specimen was measured with an electronic balance. By substituting the obtained mass M and volume V in the following equation, the density ρ of the porous body was calculated.

$$\rho \; [\text{g/cm}^3] = \text{M}[\text{g}]/\text{V}[\text{cm}^3]$$

(3) Density ρm of the Molded Article

A portion including the porous body and the decoration layer was cut out from the molded article as a specimen, and an apparent density of the molded article was measured in the same way as (2) Density $\rho$ of the Porous Body; and then, the density $\rho$m was calculated.

(4) Content Rate by Volume of the Void in the Porous Body

A specimen with a vertical side of 10 mm and a horizontal side of 10 mm was cut out from the porous body, and the section thereof was observed with a scanning electron microscope (SEM) (S-4800 Type: manufactured by Hitachi High-Technologies Corp.); and then, 10 portions from the surface of the specimen at regular intervals were photographed with a magnification of 1,000. In each of these pictures, the area Aa of the void in the picture was obtained; and then, the void rate was calculated by dividing the area Aa of the void with the total area in the picture. The content rate by volume of the void in the porous body was obtained as an arithmetic average value from the void rates of total 50 portions, obtained from 5 specimens and 10 portions in each specimen.

(5) Observation of the States of the Porous Body and of the Decoration Layer

Similarly to (4), the specimen was cut out from the molded article; and after the specimen was embedded into an epoxy resin, this was polished, and then the section thereof was observed by means of a laser microscope. This observation was made to find whether the decoration layer penetrated into the porous body (especially, into the holes formed on the surface and the continuous voids in the thickness direction), and whether the reinforcing fibers constituting the porous body penetrated into the decoration layer.

(6) Surface Roughness Ra1 of the Porous Body and Surface Roughness Ra2 of the Molded Article

With regard to the porous body or the molded article, the cut-off value and the standard length were selected in accordance with JIS B 0601 (2001), and then, the surface roughnesses Ra1 ($\mu$m) and Ra2 ($\mu$m) were obtained by using the surface roughness meter.

(7) Air Permeability of the Porous Body (Air Permeability in the Thickness Direction)

The air permeability of the porous body was measured in accordance with following (a) to (d). When air permeation was confirmed at 500 Pa or lower, i.e., the upper limit in the test condition based on the JIS standard, this was judged to be "air permeable"; and the other was judged to be "air impermeable".

(a) A specimen having the size of 100 mm $\times$ 100 mm with the thickness of 5 mm is cut out from the porous body (when the thickness is 5 mm or less, this is used as it is; when the thickness is more than 5 mm, the thickness thereof is adjusted by cutting processing or the like).
(b) Edges of the specimen (cut surfaces) are covered with 4-surface tape (to prevent air permeation to a direction perpendicular to a thickness direction).
(c) The specimen is attached to one end of the cylinder of the test machine measurable with the JIS L1096 (2010) A method (Frazier method).
(d) The aspiration fan and the air hole are adjusted such that the pressure with an inclined manometer may be 500 Pa or less.

(8) Compression Strength Test of the Porous Body

A specimen with the size of 25 mm $\times$ 25 mm was cut out from the porous body, and the compression strength of the porous body was measured by using a universal testing machine with referring to JIS K7220 (2006). Here, the compression strength $\sigma$m was calculated from the following equation by using the maximum force Fm when the deformation rate reached 50% and the bottom section area A0 of the specimen before the test. The measurement instrument, "Instron (registered trademark)" 5565-type universal material testing machine (manufactured by Instron Japan Co., Ltd.) was used.

$$\sigma m \ [kPa] \ = \ 10^3 \ \times \ Fm \ [N]/A0 \ [mm^2]$$

(9) Adhesion Property of the Decoration Layer to the Porous Body

The adhesion property of the decoration layer was evaluated with General test methods for paintsMechanical properties of coating films -- Adhesion (Crosscut method) in accordance with JIS K5600-5-6 (1999). The specimen was observed with a laser microscope (VK-9510: manufactured by Keyence Corp.) with a magnification of 400. The observed picture was developed on a general image analysis software; and by utilizing the program incorporated in the software, the delaminated area of the decoration layer observed in the picture was obtained. The test results in Table 1 belonging to the classes 0 to 3 in accordance with JIS K5600-5-6 were judged good; and those belonging to the classes 4 to 5 were judged not good.

In Examples and Comparative Examples described below, the following materials were used.

Reinforcing Fiber Mat 1

Chopped carbon fibers were obtained by cutting "Torayca" T700S-12K (manufactured by Toray Industries, Inc.) to the length of 5 mm with a cartridge cutter. A dispersion solution with the concentration of 0.1% by mass including water and a surfactant (polyoxyethylene lauryl ether (trademark): manufactured by Nakarai Tesque, Inc.) was prepared; and by using this dispersion solution and the chopped carbon fibers, a reinforcing fiber mat was produced by using the production equipment of the reinforcing fiber mat as illustrated in FIG. 2. The production equipment illustrated in FIG. 2 is provided with, as a dispersion tank, a cylindrical vessel with a diameter of 1,000 mm having in the bottom thereof an opening cock and a linear transporting part (inclination angle of 30°) connecting between the dispersion tank and a papermaking tank. A stirrer is installed in the upper opening of the dispersion tank; the chopped carbon fibers and the dispersion solution (dispersion medium) can be charged from this opening. The papermaking tank is provided in the bottom thereof with a mesh conveyer having a papermaking surface having the width of 500 mm; and a conveyer that can transport the carbon fiber substrate (paper-made substrate) is connected to the mesh conveyer. The papermaking was carried out in the dispersion solution with the carbon fiber concentration of 0.05% by mass. The paper-made carbon fiber substrate was dried in a drying oven at 200°C for 30 minutes to obtain the reinforcing fiber mat with the basis weight of 100 g/m$^2$.

PP Resin

A resin sheet with the basis weight of 100 g/m$^2$, formed of 80% by mass of an unmodified polypropylene resin ("Prime Polypro" (registered trademark) J105G: manufactured by Prime Polymer Co., Ltd.) and 20% by mass of an acid-modified polypropylene resin ("ADMER" QB510: manufactured by Mitsui Chemicals, Inc.), was prepared.

Decoration Layer 8A

A PP resin film "Purethermo" (manufactured by Idemitsu Unitech Co., Ltd.) was prepared as the decoration layer 8A.

Decoration Layer 8B

A PET resin film "Picasus" (manufactured by Toray Industries, Inc.) was prepared as the decoration layer 8B.

Decoration Layer 8C

A shrink film made of a polyvinyl chloride resin was prepared as the decoration layer 8C.

Foamed Body

A polypropylene foam sheet "F-cell" CP3030 (manufactured by Furukawa Electric Co., Ltd.) was prepared as the foamed body.

Precursor of the Porous Body

A piled substance was prepared in which the reinforcing fiber mat 1 as the reinforcing fiber mat and the PP resin as the resin sheet were disposed in the order of [resin sheet/reinforcing fiber mat/resin sheet/reinforcing fiber mat/reinforcing fiber mat/resin sheet/reinforcing fiber mat/resin sheet]. Next, by way of the following processes (I) to (IV), the precursor of the porous body was obtained.

Process (I): The piled substance is disposed in a cavity of a mold for press molding that is preheated at 200°C; and then, the mold is closed.

Process (II): Next, a pressure of 3 MPa is applied, and then, this condition is kept for 180 seconds.
Process (III): After the process (II), the temperature of the cavity is lowered to 50°C with keeping the pressure.
Process (IV): The mold is opened, and the precursor of the porous body is taken out.

Porous Body 7A

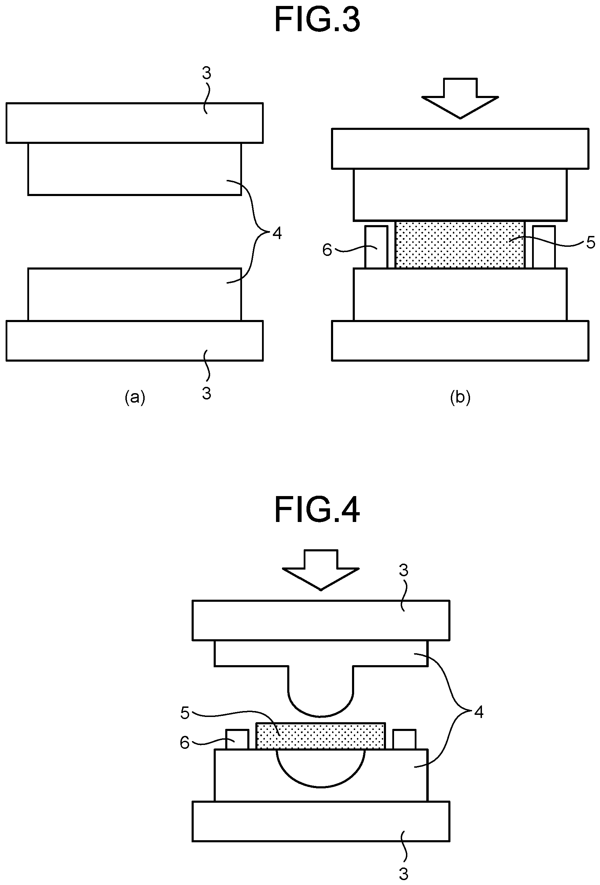

By using the precursor of the porous body and a press-molding mold that has a press-machine's hot plate 3 and a mold 4 and that is capable of producing a flat plate as illustrated in FIG. 3, a porous body 7A was obtained by way of the following processes (I) to (V).

Process (I): The precursor 5 of the porous body was preheated for 60 seconds by means of an IR heater whose temperature was set at 260°C.
Process (II): After the preheating, the precursor 5 was disposed in a mold cavity for press molding whose temperature was set at 120°C. At this time, a metal spacer 6 was inserted to adjust the thickness of the porous body.
Process: (III): Next, a pressure of 3 MPa was applied by means of the press-machine's hot plate 3; and then, this state was kept for 60 seconds.
Process (IV): Then, the cavity temperature was lowered to 50°C with keeping the pressure.
Process (V): the mold 4 was opened, and the porous body was taken out.

Porous Body 7B

The porous body 7B having a hemisphere shape was obtained by the same way as the porous body 7A except that the mold 4 capable of producing a hemisphere shape as illustrated in FIG. 4 was used.

Example 1

The porous body 7A was prepared as the porous body 7 and the decoration layer 8A was prepared as the decoration layer 8. As illustrated in FIG. 5, the porous body 7 was disposed in the furnace 10 whose temperature was set at 80°C; and then, by means of an IR heater 9, the decoration layer 8 was preheated to 130°C (preheating process). After the decoration layer 8 was heated, the porous body 7 was pressed to the decoration layer 8 with the force of 0.03 KN to shape the decoration layer 8 and at the same time the porous body 7 and the decoration layer 8 were integrated (shaping and integrating process) to obtain the molded article. The characteristics of the molded article obtained in Example 1 are listed in Table 1.

Example 2

As illustrated in FIG. 6, the molded article was obtained by the same way as Example 1 except that the porous body 7B was used as the porous body 7. The characteristics of the molded article obtained in Example 2 are listed in Table 1.

Example 3

The porous body 7B was used as the porous body 7 and the decoration layer 8C was used as the decoration layer 8. After the porous body 7 was covered with the decoration layer 8, a hot wind whose temperature was set 150°C was blown by means of a dryer to adhere the decoration layer 8 to the porous body 7. Then, by means of an ultrasonic welding machine, the porous body 7 and the decoration layer 8 were integrated to obtain the molded article. The characteristics of the molded article obtained in Example 3 are listed in Table 1.

Example 4

The molded article was obtained by the same way as Example 2 except that the decoration layer 8B was used as the decoration layer 8 and that the preheating temperature condition was set at 160°C. The characteristics of the molded article obtained in Example 4 are listed in Table 1.

Example 5

By the same way as Example 1, except that the porous body 7A was used as the porous body 7 and the decoration layer 8A was used as the decoration layer 8, and that as illustrated in FIG. 7, the porous body 7 was pressed to the decoration layer 8 with the pressing force of 0.1 KN while evacuating the space between the porous body 7 and the decoration layer 8 in the furnace 10, the decoration layer 8 was shaped and at the same time the porous body 7 and the decoration layer 8 were integrated (shaping and integrating process) to obtain the molded article. The characteristics of the molded article obtained in Example 5 are listed in Table 1.

Example 6

The molded article was obtained by the same way as Example 5 except that the preheating temperature was set at 150°C. The characteristics of the molded article obtained in Example 6 are listed in Table 1.

Example 7

By the same way as Example 2, except that the porous body 7B was used as the porous body 7 and the decoration layer 8A was used as the decoration layer 8, and that as illustrated in FIG. 8, the porous body 7 was pressed to the decoration layer 8 with the pressing force of 0.1 KN, the decoration layer 8 was shaped and at the same time the pressure is reduced from the side of the porous body 7 (from the side opposite to the contacting surface with the decoration layer 8) thereby integrating the porous body 7 and the decoration layer 8 (shaping and integrating process) to obtain the molded article. The characteristics of the molded article obtained in Example 7 are listed in Table 1.

Comparative Example 1

The molded article was obtained in the same way as Example 5 except that a foamed body (independent) formed of only a resin, not including reinforcing fibers, was used as the porous body. The characteristics of the molded article obtained in Comparative Example 1 are listed in Table 1.

Comparative Example 2

The molded article was obtained in the same way as Comparative Example 1 except that a frame to support the porous body formed of the foamed body (independent) was used. The characteristics of the molded article obtained in Comparative Example 2 are listed in Table 1.

Comparative Example 3

The molded article was obtained in the same way as Example 2 except that the preheating process to preheat the decoration layer 8 was omitted. The characteristics of the molded article obtained in Comparative Example 3 are listed in Table 1.

Comparative Example 4

The molded article was obtained in the same way as Example 2 except that after the preheating process, the decoration layer 8 was disposed on the porous body 7 without pressing to the porous body 7 and without shaping. The characteristics of the molded article obtained in Comparative Example 4 are listed in Table 1.

Discussion

In the production method of the molded article described in Examples, the porous body and the decoration layer were integrated with shaping the decoration layer; and thus, productivity of the molded article was excellent.
According to the invention, because the porous body having high compression strength was used, the molded article was successfully obtained without using a frame. Examples 1 to 3 are superior in the point that the decoration layer can be shaped on the surface of the porous body even with simple equipment. In Example 4, the decoration layer was able to be shaped on the porous body even when the resins in the porous body and the decoration layer were different. In Example 5, even in the vacuum molding with the increased pressing force, the decoration layer was able to be shaped without crushing the porous body; and in addition, because of the increase in the pressing force, the reinforcing fibers successfully penetrate into the decoration layer, whereby the adhesion property was able to be enhanced. In Example 6, by changing the preheating condition, the thermal welding characteristic of the resins to each other was successfully enhanced, whereby the adhesion property thereof was also able to be enhanced. In Example 7, because the decoration layer side of the porous body was made into an evacuated state by evacuation via the porous body, the decoration layer and the porous body were integrated more firmly. On the other hand, in Comparative Example 1, the porous body was crushed with a high pressing force, whereby the molded article failed to be obtained.

In Comparative Example 2, in order to prevent the porous body from being crushed, the frame for the shaping and integrating mold was used; nevertheless, the porous body was crushed (thinned) in the thickness direction thereof, so that the molded article having a required shape failed to be obtained although integration was possible. In Comparative Examples 3 and 4, the adhesion between the porous body and the decoration layer was so poor that the decoration layer failed to be shaped along the porous body; and thus, the required, molded article failed to be obtained. Accordingly, it is clear that the method for producing the molded article according to the present invention is superior not only in the point that the decoration layer can be readily shaped to and integrated with the porous body but also in the point that the degree of freedom in the molding condition is high.

Table 1

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| **Precursor of porous body** | | | | | | | | | | | | |
| Fiber substrate | | | | | | | | | | | | |
|   Reinforcing fiber | - | Carbon fiber | Carbon fiber | Carbon fiber | Carbon fiber | Carbon fiber | Carbon fiber | Carbon fiber | - | - | Carbon fiber | Carbon fiber |
|   Fiber length | mm | 5 | 5 | 5 | 5 | 5 | 5 | 5 | - | - | 5 | 5 |
|   Substrate preparation | Method | Wet method | Wet method | Wet method | Wet method | Wet method | Wet method | Wet method | - | - | Wet method | Wet method |
|   Basis weight | g/cm² | 100 | 100 | 100 | 100 | 100 | 100 | 100 | - | - | 100 | 100 |
|   Fiber opening | State | Mono-filament | Mono-filament | Mono-filament | Mono-filament | Mono-filament | Mono-filament | Mono-filament | - | - | Mono-filament | Mono-filament |
|   Fiber dispersion | State | Random | Random | Random | Random | Random | Random | Random | - | - | Random | Random |
| Resin substrate | | | | | | | | | | | | |
|   Resin | - | PP | PP | PP | PP | PP | PP | PP | PP | PP | PP | PP |
|   Basis weight | g/cm² | 100 | 100 | 100 | 100 | 100 | 100 | 100 | 100 | 100 | 100 | 100 |
| Thickness | mm | 1.12 | 1.12 | 1.12 | 1.12 | 1.12 | 1.12 | 1.12 | 3 | 3 | 1.12 | 1.12 |
| **Porous body** | | | | | | | | | | | | |
| Thickness | µm | 3.4 | 3.4 | 3.4 | 3.4 | 3.4 | 3.4 | 3.4 | 4 | 4 | 3.4 | 3.4 |
| Surface roughness:Ra1 | µm | 250 | 250 | 250 | 250 | 250 | 250 | 250 | 50 | 50 | 250 | 250 |
| Compression strength | MPa | 6 | 6 | 6 | 6 | 6 | 6 | 6 | 0.5 | 0.5 | 6 | 6 |
| Reinforcing fiber content in porous body | Vol % | 6.7 | 6.7 | 6.7 | 6.7 | 6.7 | 6.7 | 6.7 | - | - | 6.7 | 6.7 |
| Resin content in porous body | Vol % | 26.6 | 26.6 | 26.6 | 26.6 | 26.6 | 26.6 | 26.6 | 33 | 33 | 26.6 | 26.6 |
| Void content in porous body | Vol % | 66.7 | 66.7 | 66.7 | 66.7 | 66.7 | 66.7 | 66.7 | 67 | 67 | 66.7 | 66.7 |
| Density of porous body | g/cm³ | 0.36 | 0.36 | 0.36 | 0.36 | 0.36 | 0.36 | 0.36 | 0.3 | 0.3 | 0.36 | 0.36 |
| Form of porous body (air permeability) | - | Permeable | Permeable | Permeable | Permeable | Permeable | Permeable | Permeable | Impermeable | Impermeable | Permeable | Permeable |
| Shape of porous body | - | Flat plate | Hemi-sphere | Hemi-sphere | Hemi-sphere | Hemi-sphere | Hemi-sphere | Hemi-sphere | Hemi-sphere | Hemi-sphere | Hemi-sphere | Hemi-sphere |
| **Decoration layer** | | | | | | | | | | | | |
| Resin | - | PP | PP | PVC | PET | PP | PP | PP | PP | PP | PP | PP |
| Thickness | µm | 200 | 200 | 200 | 300 | 200 | 200 | 200 | 200 | 200 | 200 | 200 |
| **Molded article** | | | | | | | | | | | | |
| Pre-heating temperature of decoration layer | °C | 130 | 130 | 80 | 160 | 130 | 150 | 130 | 130 | 130 | - | 130 |
| Pre-heating temperature of porous body | °C | 80 | 80 | 80 | 80 | 80 | 120 | 80 | 80 | 80 | 80 | - |
| Pressing force | KN | 0.03 | 0.03 | 0.03 | 0.03 | 0.1 | 0.1 | 0.1 | 0.1 | 0.1 | 0.03 | - |
| Integration timing | - | Simultaneous with shaping | Simultaneous with shaping | After shaping | Simultaneous with shaping | Simultaneous with shaping | Simultaneous with shaping | Simultaneous with shaping | Simultaneous with shaping | Simultaneous with shaping | Simultaneous with shaping | Simultaneous with shaping |
| Surface roughness: Ra2 | % | 30 | 30 | 20 | 30 | 35 | 35 | 40 | - | 20 | - | - |
| State of porous body/decoration layer | - | Decoration layer penetrates into porous body | Decoration layer penetrates into porous body | Adhesion layer | Decoration layer penetrates into porous body | Reinforcing fiber penetrates into decoration layer | Thermal welding and reinforcing fiber penetrates into decoration layer | Reinforcing fiber penetrates into decoration layer | - | No penetration (adhesion) | No penetration (without adhesion) | No penetration (partial adhesion) |
| Adhesion of decoration layer | Class | 2 | 2 | 2 | 2 | 1 | 0 | 0 | - | 4 | 5 | 4 |

Industrial Applicability

According to the present invention, productivity of the molded article having excellent rigidity and lightweightness and also having designability can be improved.

Reference Signs List

| | |
|---|---|
| 1 | Reinforcing fibers |
| 1a to 1f | Monofilament |
| 2 | Two-dimensional orientation angle |
| 3 | Press-machine's hot plate |
| 4 | Mold |
| 5 | Precursor |
| 6 | Spacer |
| 7 | Porous body |
| 8 | Decoration layer |
| 9 | IR heater |
| 10 | Furnace |

**Claims**

1.  A method for producing a molded article obtained by integrating a decoration layer (8) onto a surface of a porous body (7) including a reinforcing fiber (1), the porous body (7) being air-permeable, and the compression strength of the porous body (7) upon compression of 50%, measured in accordance with the method described in the description, being 1 MPa or more, the method comprising:

    a preheating process at which the decoration layer (8) is preheated; and
    a shaping and integrating process at which the porous body (7) is pressed to the decoration layer (8) or the decoration layer (8) is pressed to the porous body (7) without using a frame to support the porous body (7) to shape the decoration layer (8), and the porous body (7) and the decoration layer (8) are integrated to each other, wherein in a closed space having a space including the porous body (7) and having a space not including the porous body (7), these spaces being separated by the decoration layer (8) as a boundary between these spaces, pressures are made different between these two spaces to perform the shaping.

2.  The method for producing a molded article according to claim 1, wherein a pressing force at the shaping and integrating process is 1 KN or less.

3.  A method for producing a molded article obtained by integrating a decoration layer (8) onto a surface of a porous body (7) including a reinforcing fiber (1), the porous body (7) being air-permeable, and the compression strength of the porous body (7) upon compression of 50%, measured in accordance with the method described in the description, being 1 MPa or more, the method comprising:

    a preheating process at which the decoration layer (8) is preheated;
    a shaping process at which the porous body (7) is pressed to the decoration layer (8) or the decoration layer (8) is pressed to the porous body (7) without using a frame to support the porous body (7) to shape the decoration layer (8); and
    an integrating process at which the porous body (7) and the decoration layer (8) are integrated to each other, wherein in a closed space having a space including the porous body (7) and having a space not including the porous body (7), these spaces being separated by the decoration layer (8) as a boundary between these spaces, pressures are made different between these two spaces to perform the shaping.

4.  The method for producing a molded article according to any one of claims 1 to 3, the method further comprising a process at which the porous body (7) is preheated at a temperature equal to or lower than a temperature at the preheating process.

5.  The method for producing a molded article according to any one of claims 1 to 4, wherein a surface roughness Ra1 of the porous body (7) is 200 μm or less.

6.  The method for producing a molded article according to any one of claims 1 to 5, wherein a surface roughness Ra2 of the molded article is 100 μm or less.

7.  The method for producing a molded article according to any one of claims 1 to 6, wherein the porous body (7) further includes a resin and a void.

8.  The method for producing a molded article according to any one of claims 1 to 7, wherein the porous body (7) has a void that is continuous in a thickness direction of the porous body (7).

9.  The method for producing a molded article according to any one of claims 1 to 8, wherein the porous body (7) and the decoration layer (8) are bound by thermal welding.

10. The method for producing a molded article according to any one of claims 1 to 9, wherein the decoration layer (8) penetrates into the porous body (7).

11. The method for producing a molded article according to any one of claims 1 to 10, wherein the reinforcing fiber (1) penetrates into the decoration layer (8).

12. The method for producing a molded article according to any one of claims 1 to 11, wherein at the shaping and integrating process or at the integrating process, the porous body (7) and the decoration layer (8) are integrated to each other by evacuating from a side of the porous body (7) that is opposite to a contacting surface of the porous body (7) with the decoration layer (8).

**Patentansprüche**

1. Verfahren zur Herstellung eines Formartikels, erhalten durch Integrieren einer Dekorationsschicht (8) auf eine Oberfläche eines porösen Körpers (7), einschließlich einer Verstärkungsfaser (1), wobei der poröse Körper (7) luftdurchlässig ist und die Kompressionsfestigkeit des porösen Körpers (7) bei einer Kompression von 50 %, die gemäß dem in der Beschreibung beschriebenen Verfahren gemessen wurde, 1 MPa oder mehr beträgt, wobei das Verfahren Folgendes umfasst:

   ein Vorerhitzungsverfahren, bei dem die Dekorationsschicht (8) vorerhitzt wird; und
   ein Form- und Integrationsverfahren, bei dem der poröse Körper (7) auf die Dekorationsschicht (8) gepresst oder die Dekorationsschicht (8) auf den porösen Körper (7) gepresst wird, ohne dafür einen Rahmen zu verwenden, um den porösen Körper (7) zu stützen, um die Dekorationsschicht (8) zu formen, und wobei der poröse Körper (7) und die Dekorationsschicht (8) miteinander integriert werden,
   wobei in einem abgeschlossenen Raum, der einen Raum, einschließlich des porösen Körpers (7) aufweist, und einen Raum, nicht einschließlich des porösen Körpers (7) aufweist, wobei diese Räume durch die Dekorationsschicht (8) als Grenze zwischen diesen Räumen getrennt werden, Drücke zwischen diesen zwei Räumen unterschiedlich eingestellt sind, um das Formen durchzuführen.

2. Verfahren zur Herstellung eines Formartikels nach Anspruch 1, wobei eine Presskraft im Form- und Integrationsverfahren 1 KN oder weniger beträgt.

3. Verfahren zur Herstellung eines Formartikels, erhalten durch Integrieren einer Dekorationsschicht (8) auf eine Oberfläche eines porösen Körpers (7), die eine Verstärkungsfaser (1) umfasst, wobei der poröse Körper (7) luftdurchlässig ist, und die Kompressionsfestigkeit des porösen Körpers (7) bei einer Kompression von 50 %, die gemäß dem in der Beschreibung beschriebenen Verfahren gemessen wurde, 1 MPa oder mehr beträgt, wobei das Verfahren Folgendes umfasst:

   ein Vorerhitzungsverfahren, bei dem die Dekorationsschicht (8) vorerhitzt wird; und
   ein Formverfahren, bei dem der poröse Körper (7) auf die Dekorationsschicht (8) gepresst oder die Dekorationsschicht (8) auf den porösen Körper (7) gepresst wird, ohne dafür einen Rahmen zu verwenden, um den porösen Körper (7) zu stützen, um die Dekorationsschicht (8) zu formen; und
   ein Integrationsverfahren, bei dem der poröse Körper (7) und die Dekorationsschicht (8) miteinander integriert werden,
   wobei in einem abgeschlossenen Raum, der einen Raum, einschließlich des porösen Körpers (7) aufweist, und einen Raum, nicht einschließlich des porösen Körpers (7) aufweist, wobei diese Räume durch die Dekorationsschicht (8) als Grenze zwischen diesen Räumen getrennt werden, Drücke zwischen diesen zwei Räumen unterschiedlich eingestellt sind, um das Formen durchzuführen.

4. Verfahren zur Herstellung eines Formartikels nach einem der Ansprüche 1 bis 3, wobei das Verfahren ferner ein Verfahren umfasst, bei dem der poröse Körper (7) bei einer Temperatur kleiner oder gleich einer Temperatur im Vorerhitzungsverfahren vorerhitzt wird.

5. Verfahren zur Herstellung eines Formartikels nach einem der Ansprüche 1 bis 4, wobei eine Oberflächenrauigkeit Ra1 des porösen Körpers (7) 200 μm oder weniger beträgt.

6. Verfahren zur Herstellung eines Formartikels nach einem der Ansprüche 1 bis 5, wobei eine Oberflächenrauigkeit Ra2 des Formartikels 100 μm oder weniger beträgt.

7. Verfahren zur Herstellung eines Formartikels nach einem der Ansprüche 1 bis 6, wobei der poröse Körper (7) ferner ein Harz und einen Hohlraum umfasst.

8. Verfahren zur Herstellung eines Formartikels nach einem der Ansprüche 1 bis 7, wobei der poröse Körper (7) einen Hohlraum aufweist, der in einer Richtung der Dicke des porösen Körpers (7) durchgehend ist.

**9.** Verfahren zur Herstellung eines Formartikels nach einem der Ansprüche 1 bis 8, wobei der poröse Körper (7) und die Dekorationsschicht (8) durch thermisches Schweißen verbunden werden.

**10.** Verfahren zur Herstellung eines Formartikels nach einem der Ansprüche 1 bis 9, wobei die Dekorationsschicht (8) bis in den porösen Körper (7) dringt.

**11.** Verfahren zur Herstellung eines Formartikels nach einem der Ansprüche 1 bis 10, wobei die Verstärkungsfaser (1) bis in die Dekorationsschicht (8) dringt.

**12.** Verfahren zur Herstellung eines Formartikels nach einem der Ansprüche 1 bis 11, wobei der poröse Körper (7) und die Dekorationsschicht (8) in dem Form- und Integrationsverfahren oder in dem Integrationsverfahren durch Vakuumieren von einer Seite des porösen Körpers (7), die einer kontaktierenden Oberfläche des porösen Körpers (7) gegenüberliegt, mit der Dekorationsschicht (8) miteinander integriert werden.

**Revendications**

**1.** Procédé de production d'un article moulé obtenu en intégrant une couche de décoration (8) sur une surface d'un corps poreux (7) incluant une fibre de renforcement (1), le corps poreux (7) étant perméable à l'air, et la résistance à la compression du corps poreux (7) lors d'une compression de 50 %, mesurée conformément au procédé décrit dans la description, étant de 1 MPa ou plus, le procédé comprenant :

un processus de préchauffage au cours duquel la couche de décoration (8) est préchauffée ; et
un procédé de mise en forme et d'intégration au cours duquel le corps poreux (7) est pressé sur la couche de décoration (8) ou la couche de décoration (8) est pressée sur le corps poreux (7) sans utiliser un cadre pour supporter le corps poreux (7) afin de mettre en forme la couche de décoration (8), et le corps poreux (7) et la couche de décoration (8) sont intégrés l'un à l'autre,
dans lequel dans un espace fermé présentant un espace incluant le corps poreux (7) et présentant un espace n'incluant pas le corps poreux (7), ces espaces étant séparés par la couche de décoration (8) en tant que limite entre ces espaces, des pressions sont rendues différentes entre ces deux espaces pour effectuer la mise en forme.

**2.** Procédé de production d'un article moulé selon la revendication 1, dans lequel une force de pression au niveau du processus de mise en forme et d'intégration est inférieure ou égale à 1 KN.

**3.** Procédé de production d'un article moulé obtenu en intégrant une couche de décoration (8) sur une surface d'un corps poreux (7) incluant une fibre de renforcement (1), le corps poreux (7) étant perméable à l'air, et la résistance à la compression du corps poreux (7) lors d'une compression de 50 %, mesurée conformément au procédé décrit dans la description, étant de 1 MPa ou plus, le procédé comprenant :

un processus de préchauffage auquel la couche de décoration (8) est préchauffée ;
un processus de mise en forme au cours duquel le corps poreux (7) est pressé contre la couche de décoration (8) ou la couche de décoration (8) est pressée contre le corps poreux (7) sans utiliser un cadre pour supporter le corps poreux (7) afin de mettre en forme la couche de décoration (8) ; et
un processus d'intégration au cours duquel le corps poreux (7) et la couche de décoration (8) sont intégrés l'un à l'autre,
dans lequel dans un espace fermé présentant un espace incluant le corps poreux (7) et présentant un espace n'incluant pas le corps poreux (7), ces espaces étant séparés par la couche de décoration (8) en tant que limite entre ces espaces, des pressions sont rendues différentes entre ces deux espaces pour effectuer la mise en forme.

**4.** Procédé de production d'un article moulé selon l'une quelconque des revendications 1 à 3, le procédé comprenant en outre un processus au cours duquel le corps poreux (7) est préchauffé à une température égale ou inférieure à une température lors du processus de préchauffage.

**5.** Procédé de production d'un article moulé selon l'une quelconque des revendications 1 à 4, dans lequel une rugosité de surface Ra1 du corps poreux (7) est de 200 $\mu$m ou moins.

**6.** Procédé de production d'un article moulé selon l'une quelconque des revendications 1 à 5, dans lequel une rugosité de surface Ra2 de l'article moulé est de 100 $\mu$m ou moins.

**7.** Procédé de production d'un article moulé selon l'une quelconque des revendications 1 à 6, dans lequel le corps poreux (7) inclut en outre une résine et un vide.

**8.** Procédé de production d'un article moulé selon l'une quelconque des revendications 1 à 7, dans lequel le corps poreux (7) présente un vide qui est continu dans une direction d'épaisseur du corps poreux (7).

**9.** Procédé de production d'un article moulé selon l'une quelconque des revendications 1 à 8, dans lequel le corps poreux (7) et la couche de décoration (8) sont liés par soudage thermique.

**10.** Procédé de production d'un article moulé selon l'une quelconque des revendications 1 à 9, dans lequel la couche de décoration (8) pénètre dans le corps poreux (7).

**11.** Procédé de fabrication d'un article moulé selon l'une quelconque des revendications 1 à 10, dans lequel la fibre de renforcement (1) pénètre dans la couche de décoration (8).

**12.** Procédé de production d'un article moulé selon l'une quelconque des revendications 1 à 11, dans lequel, lors du processus de mise en forme et d'intégration ou lors du processus d'intégration, le corps poreux (7) et la couche de décoration (8) sont intégrés l'un à l'autre par évacuation depuis un côté du corps poreux (7) qui est opposé à une surface de contact du corps poreux (7) avec la couche de décoration (8).

# FIG.1

(a)

(b)

# FIG.2

# FIG.3

(a) (b)

# FIG.4

# FIG.5

(a)           (b)           (c)

# FIG.6

(a)           (b)           (c)

# FIG.7

(a)          (b)          (c)

# FIG.8

(a)          (b)          (c)

**EP 3 778 195 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6123965 B
- JP 2016078451 A
- JP H09254248 A
- US 2015029634 A
- US 2005161865 A1